# DEMANDE DE BREVET EUROPEEN

(11) **EP 2 641 884 A1**
(43) Date de publication de la demande: **25.09.2013**
(21) Numéro de dépôt: 12160647.9
(22) Date de dépôt: 21.03.2012
(51) Int. Cl.: C04B 7/32, C04B 28/14, C04B 28/16

(54) **Procédé de préparation de liants hydrauliques comprenant un mélange de clinker, ou de ciment, sulfo-alumineux et de sulfates de calcium**

(71) Demandeur: Greenmade Development Limited, Hong Kong (CN)
(72) Inventeur: Dumoulin, Edouard, 06200 NICE (FR)
(74) Mandataire: Roman, Alexis

(57) **Abrégé**

L'invention concerne un procédé de préparation de liants hydrauliques comprenant un mélange de clinker, ou de ciment, sulfo-alumineux et de sulfates de calcium, et dont la réhydratation produit majoritairement de l'ettringite primaire, ledit procédé comprenant une étape consistant à injecter dans un conduit de calcination aéraulique, le mélange de clinker, ou de ciment, sulfo-alumineux et de sulfates de calcium sous forme de poudre pulvérulente, ledit conduit étant traversé par un flux d'air chaud turbulent, saturé en vapeur d'eau, ayant une température comprise entre 250°C et 700°C et une vitesse comprise entre 8 m/s et 40 m/s.

## Description

### Domaine technique de l'invention.

L'invention a pour objet un procédé de préparation de liants hydrauliques comprenant un mélange de clinker, ou de ciment, sulfo-alumineux et de sulfates de calcium, et dont la réhydratation produit majoritairement de l'ettringite primaire.

L'invention a également pour objet les liants hydrauliques obtenus ainsi que l'utilisation de ces liants hydrauliques dans l'industrie cimentaire.

Elle a encore pour objet une installation industrielle permettant la mise en oeuvre d'un tel procédé.

L'invention concerne le domaine technique de l'industrie cimentaire et plus particulièrement les compositions cimentaires composites issues d'un mélange de clinker, ou de ciment, sulfo-alumineux et de sulfates de calcium.

### État de la technique.

Les liants hydrauliques composites à base de sulfate de calcium et de clinker, ou ciments, sulfo-alumineux sont bien connus de l'art antérieur. Le document brevet FR 2.868.772 (LY VANNA) décrit par exemple une telle composition dans laquelle le clinker sulfo-alumineux est dosé à hauteur de 20% à 60% en poids par rapport au poids total de la composition pour améliorer de façon conséquente les propriétés de résistance à l'humidité du sulfate de calcium.

La réhydratation d'un liant hydraulique de ce type produit de l'ettringite. L'équation d'hydratation est la suivante :

C₄A₃Ŝ + 2CŜH₂ + 34H → C₆A Ŝ₃H₃₂ + 2AH₃

(sulfoaluminate de calcium + sulfate de calcium + eau → ettringite + gibbsite)

où C = CaO ; A = Al₂O₃ ; Ŝ= SO₃ ; H = H₂O ; S= SiO₂, selon la notation cimentière.

L'ettringite formée pendant les premières minutes suivant le contact du liant avec l'eau, ou ettringite primaire, est non nocive et permet de réguler la prise du matériau. La majorité de l'ettringite primaire est généralement formée au bout de 24 heures. Ensuite, de l'ettringite secondaire, ou ettringite différée, peut apparaître. Cette ettringite secondaire est nocive car elle peut provoquer un gonflement et à terme, une désagrégation du matériau durci.

La réhydratation des liants hydrauliques composites connus de l'art antérieur, ne produit que 50 % à 60 % d'ettringite primaire. Ce faible rendement est vraisemblablement dû à une cinétique de réhydratation relativement lente.

Un objectif de l'invention est d'augmenter le rendement d'ettringite primaire obtenue par la réhydratation d'un liant hydraulique comprenant un mélange de clinker, ou de ciment, sulfo-alumineux et de sulfates de calcium.

Un autre objectif de l'invention est de proposer un procédé permettant de préparer des liants hydrauliques comprenant un mélange de clinker, ou de ciment, sulfo-alumineux et de sulfates de calcium, simple à mettre en oeuvre et ne nécessitant pas beaucoup d'énergie.

Encore un autre objectif de l'invention est de proposer une installation industrielle simple et peu coûteuse à réaliser permettant de mettre en oeuvre ce procédé.

L'invention a également comme objectif de proposer un liant hydraulique ayant de bonnes performances mécaniques.

### Divulgation de l'invention.

La solution proposée par l'invention est un procédé de préparation de liants hydrauliques comprenant un mélange de clinker, ou de ciment, sulfo-alumineux et de sulfates de calcium, et dont la réhydratation produit majoritairement de l'ettringite primaire, ledit procédé comprenant une étape remarquable consistant à injecter dans un conduit, le mélange de clinker, ou de ciment, sulfo-alumineux et de sulfates de calcium sous forme de poudre pulvérulente, ledit conduit étant traversé par un flux d'air chaud préférentiellement turbulent, saturé en vapeur d'eau, ayant une température comprise entre 250°C et 700°C et une vitesse préférentiellement comprise entre 8 m/s et 40 m/s.

De cette manière, les deux composants majoritaires (C₄A₃Ŝ et CŜH₂) soumis aux forces cinétiques et aux chocs thermiques induits par le flux d'air chaud, sont homogénéisés et interagissent dés le début de la déshydratation des composants CŜH₂. Les composants C₄A₃Ŝ et CŜH₂ subissent des transformations morphologiques qui accroissent radicalement leurs performances hydrauliques, entrainant des résistances précoces et finales très élevées (30 MPa à 100 MPa). La demanderesse a en effet constaté de manière surprenante que les nouvelles phases composites ainsi créées présentent des morphologies cristallines spécifiques (avec des cristaux compacts), offrant des performances physico-chimiques et des cinétiques de réhydratation propices à la formation des phases majoritaires ettringitiques primaires stables dès le plus jeune âge, la formation d'ettringite secondaire étant nulle ou quasi nulle.

D'autres étapes remarquables du procédé objet de l'invention sont listées ci-dessous, chacune de ces étapes pouvant être considérée seule ou en combinaison, indépendamment de l'étape remarquable définie ci-dessus :
- on applique une contrainte mécanique sur les particules de clinker, ou de ciment, sulfo-alumineux et de sulfates de calcium, de manière à modifier leur structure cristalline ;
- on évacue du conduit les particules du mélange de clinker, ou de ciment, sulfo-alumineux et de sulfates de calcium, dès qu'elles ont atteint une granulométrie requise ;
- on refroidit le mélange de clinker, ou de ciment, sulfo-alumineux et de sulfates de calcium, après l'étape de calcination aéraulique ;
- on injecte dans le conduit de calcination aéraulique, une masse plus importante de clinker, ou de ciment, sulfo-alumineux que de sulfates de calcium ;
- on mélange le clinker, ou le ciment, sulfo-alumineux et les sulfates de calcium, avec au moins l'un des composants de la famille suivante : ciment portland, hydroxydes de calcium, ciment ferro-alumineux, fillers minéraux (pouzzolane, calcaire, fumée de silice), laitier, chaux (hydraulique, aérienne), carbonate de calcium, polycarboxylate, perlite, vermiculite, metakaolin ; cette étape de mélange étant réalisée avant l'étape de calcination aéraulique ;
- on mélange les particules du mélange de clinker, ou de ciment, sulfo-alumineux et de sulfates de calcium, avec d'autres fillers actifs ou adjuvants, cette étape de mélange étant réalisée après l'étape de calcination aéraulique.

Un autre aspect de l'invention concerne l'utilisation de liants hydrauliques obtenus par le procédé conforme à l'une des caractéristiques précédentes, pour la préparation d'un matériau de type béton ou mortier.

Encore un autre aspect de l'invention concerne une installation pour la mise en oeuvre du procédé conforme à l'une des caractéristiques précédentes, ladite installation comportant :
- un conduit de calcination aéraulique traversé par un flux d'air chaud turbulent, saturé en vapeur d'eau, ayant une température comprise entre 250°C et 700°C et une vitesse comprise entre 8 m/s et 40 m/s,
- un moyen pour injecter dans le conduit de calcination aéraulique, un mélange de clinker, ou de ciment, sulfo-alumineux et de sulfates de calcium sous forme de poudre pulvérulente.

D'autres caractéristiques remarquables de l'installation objet de l'invention sont listées ci-dessous, chacune de ces caractéristiques pouvant être considérée seule ou en combinaison, indépendamment des caractéristiques remarquables définies ci-dessus :
- une unité de gestion électronique permet de contrôler et de régler :
   o le débit, la vitesse, la température et la tension de vapeur d'eau du flux d'air chaud traversant le conduit de calcination aéraulique,
   o le débit d'injection du mélange de clinker, ou de ciment, sulfo-alumineux et de sulfates de calcium,
   o la pression dans ledit conduit,
   o la granulométrie des particules du mélange de clinker, ou de ciment, sulfo-alumineux et de sulfates de calcium, en amont et en aval dudit conduit ;
- le conduit est configuré de manière à ce que les particules du mélange de clinker, ou de ciment, sulfo-alumineux et de sulfates de calcium, impactent les parois dudit conduit lors de leur déplacement ;
- le conduit de calcination aéraulique est de forme sensiblement toroïdale ;
- le clinker, ou le ciment, sulfo-alumineux et les sulfates de calcium sont préalablement stockés dans des silos distincts, une trémie doseuse associée à un mélangeur permettant de préparer le mélange destiné à être injecté dans le conduit de calcination aéraulique ;
- un moyen pour séparer le fluide chargé de vapeur d'eau et les particules du mélange de clinker, ou de ciment, sulfo-alumineux et de sulfates de calcium, est disposé en aval du conduit de calcination aéraulique ;
- un moyen pour refroidir les particules du mélange de clinker, ou de ciment, sulfo-alumineux et de sulfates de calcium, est disposé en aval du moyen de séparation.

### Description des figures.

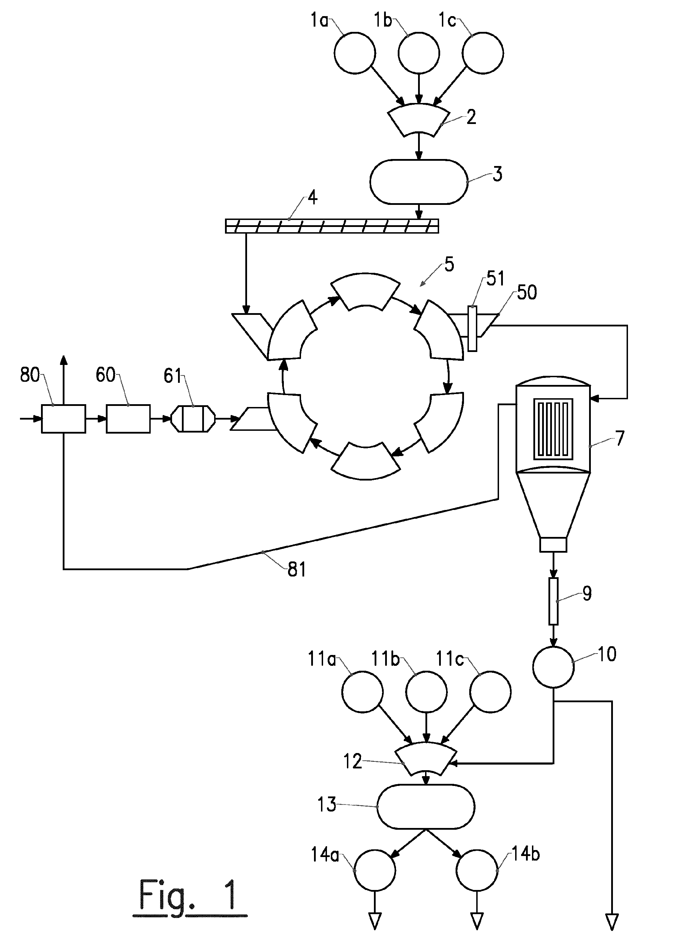

D'autres caractéristiques et avantages de la présente invention ressortiront mieux à la lecture de la description qui va suivre, faite à titre d'exemple indicatif et non limitatif, en regard du dessin annexé sur lequel la figure 1 représente schématiquement un mode préféré de réalisation de l'installation objet de l'invention.

### Modes de réalisation de l'invention.

En se rapportant à la figure annexée, le clinker, ou ciment, sulfo-alumineux (C₄A₃Ŝ) et de les sulfates de calcium (CŜH₂), sont respectivement stockés dans des silos distincts 1a et 1 b.

Le C₄A₃Ŝ est un mélange de calcaire, de bauxite et de sulfate de calcium porté à environ 1300°C puis brutalement refroidi et broyé. Préférentiellement, le C₄A₃Ŝ est formée majoritairement de yeelimite (50 % à 68 % en poids par rapport au poids total du clinker ou du ciment, noté ci-après p/p_{clinker} ou ciment), et de belite (10 % à 20 % p/p_{clinker ou} ciment). Le C₄A₃Ŝ peut également comporter d'autres composants tels que ferrite, perovskite, mayénite, ferro-aluminate de calcium, etc. La proportion de ces autres composants varie de 0 % à 20 % p/p_{clinker} ou ciment.

Les CŜH₂ sont avantageusement à base de gypse naturel, de gypse de synthèse (notamment sulfogypse, phosphogypse, borogypse, titanogypse) ou d'hémihydrate (α ou β) de sulfate de calcium, d'anhydrites naturelle ou de synthèse (notamment fluoroanhydrite, phosphoanhydrite) l'anhydrite III, et autres types de sous-produits du même type ainsi que leurs mélanges. L'utilisation du terme sulfates de calcium dans la suite de la description recouvre tous les types de sulfate de calcium cités ci-dessus.

Les C₄A₃Ŝ et CŜH₂ peuvent être mélangés avec au moins l'un des composants de la famille suivante : ciment portland, hydroxydes de calcium, ciment ferro-alumineux, fillers minéraux (pouzzolane, calcaire, fumée de silice, poudre de marbre), laitier, chaux (aérienne, hydraulique, vive), carbonate de calcium, polycarboxylate, perlite, vermiculite, metakaolin ou autres additifs chimiques de rhéologies. Ce mélange post-calcination vise à améliorer la réaction physico-chimique qui se déroule dans la suite du procédé et/ou permettent d'améliorer les propriétés du liant hydraulique et notamment les résistances mécaniques à la compression, tenue au feu, etc. Ces autres composants sont stockés dans un silo indépendant 1 c.

Une trémie doseuse 2 associée à un mélangeur 3 (par exemple à tambour), permet de préparer le mélange destiné à subir le traitement de calcination aéraulique. En pratique, le mélange est dosé dans les proportions suivantes : C₄A₃Ŝ compris entre 20 % et 90 % p/p_{mélange} ; CŜH₂ compris entre 20 % et 75 % p/p_{mélange} ; autres composants compris entre 0 % et 20 % p/p_{mélange}. La demanderesse a pu constater que les meilleurs résultats étaient obtenus lorsque le mélange comprenait une masse plus importante de C₄A₃Ŝ que de CŜH₂. Un mélange contenant environ 65 % à 75 % p/p_{mélange} de C₄A₃Ŝ, environ 25 % à 35 % p/p_{mélange} de CŜH₂, et moins de 5 % p/p_{mélange} des autres composants, aura de bonnes propriétés mécaniques.

La granulométrie du mélange à traiter est comprise entre 20 µm et 25 mm selon la nature des CŜH₂ utilisés (naturels, de synthèses ou hémihydratés), de sorte que ledit mélange se présente sous la forme d'une poudre pulvérulente. Un ou plusieurs des composés du mélange peuvent être préalablement broyés pour atteindre cette granulométrie.

Le mélange est ensuite dirigé vers une vis doseuse volumétrique 4 configurée pour injecter ledit mélange dans le circuit de calcination aéraulique 5 suivant un débit d'alimentation préalablement programmé variant de 5 tonnes/heure à 40 tonnes/heure. Tout autre moyen d'injection du mélange dans le conduit 5, et convenant à l'homme du métier, peut être utilisé. Le conduit 5 peut être droit ou non.

Conformément à l'invention, on fait interagir chimiquement les deux composants majoritaires du mélange (C₄A₃Ŝ et CŜH₂) sous l'action d'un choc thermo-dynamique, à l'intérieur d'un conduit 5 où circule un fluide à grande vitesse chargé en vapeur surchauffée. Plus particulièrement, le mélange est injecté dans le conduit, où circule un flux d'air chaud turbulent, saturé en vapeur d'eau, ayant une température comprise entre 250°C et 700°C et une vitesse comprise entre 8 m/s et 40 m/s.

Les particules de C₄A₃Ŝ et de CŜH₂ interagissent chimiquement sous l'action conjuguée :
- de la vapeur d'eau saturée,
- du choc thermique induit par la température du flux d'air chaud,
- des chocs mécaniques et de l'homogénéisation des échanges thermiques induits par les turbulences cinétiques du flux d'air.

En plus d'assurer la cohésion du liant hydraulique, ces différentes actions agissent simultanément et en synergie pour occasionner d'importantes contraintes sur les particules de C₄A₃Ŝ et de CŜH₂. Ces contraintes entraînent la transformation des paramètres de mailles cristallines, les nouvelles phases cristallines présentant une matrice cimentaire homogène et compacte. Plus particulièrement, ces nouvelles phases très réactives améliorent considérablement la cinétique de réhydratation des liants hydrauliques ainsi fabriqués et optimisent, lors de leur réhydratation, la formation des phases ettringitiques primaires stables à court terme. En outre, les particules de C₄A₃Ŝ et de CŜH₂ subissent des transformations morphologiques qui accroissent radicalement leurs performances hydrauliques, entraînant des résistances précoces et finales très élevées pouvant atteindre 100 MPa.

On pourra réaliser le chauffage de manière directe ou indirecte, par des procédés de calcination flash, des fours rotatifs, des chaudrons de cuisson ou tout autre dispositif de calcination équivalent. De manière préférée, le dispositif de chauffage préféré est avantageusement un calcinateur flash constitué d'une turbine à air 60 associée à un brûleur 61. Le débit d'air chaud généré peut varier de 5000 m³/h à 100000 m³/h.

Pendant la calcination aéraulique, la déshydratation du CŜH₂ est contrôlée en fonction des performances recherchées pour le liant hydraulique. Les meilleurs résultats sont obtenus lorsque la teneur en H₂O est comprise entre 0 % et 5 % p/p_{cŝH2}. La vaporisation des molécules d' H₂O peut avantageusement provoquer l'éclatement, voire la micronisation des particules de CŜH₂.

Le mélange est ainsi chauffé dans le conduit 5 pendant un temps variant de quelques secondes à plusieurs heures. L'atmosphère saturée en vapeur d'eau permet, même à des températures de l'ordre de 700°C, de ne pas surcuire les particules de C₄A₃Ŝ et de CŜH₂. Le débit du flux d'air chaud, sa vitesse, sa température, sa tension en vapeur d'eau, la pression dans le conduit 5 et le temps de chauffage, dépendent de plusieurs facteurs dont principalement le type de mélange à traiter, son débit d'injection, la granulométrie de ses particules, et le procédé de chauffage employé. Ces différents paramètres de calcination sont contrôlés et réglés par une unité de gestion électronique qui pilote l'ensemble de l'installation. Ils permettent de formuler des liants hydrauliques adaptés à toutes les gammes de matériaux de constructions, des plus simples aux plus performants : chapes, parpaings, panneaux, bétons légers, bétons haute performance, mortiers techniques, enduits, coulis, stabilisation des déchets, traitement de métaux lourds, colisages nucléaires, composites, etc.

Il est envisageable d'accroître davantage les contraintes mécaniques appliquées aux particules de C₄A₃Ŝ et de CŜH₂ et modifier leur structure cristalline, notamment en les densifiant, pour améliorer la cinétique de réhydratation et augmenter le rendement de formation d'ettringite primaire stable. Pour ce faire, le conduit 5 peut être configuré de manière à ce que les particules de C₄A₃Ŝ et de CŜH₂ impactent les parois dudit conduit lors de leur déplacement. Le conduit 5 est avantageusement de forme sensiblement toroïdale de manière à ce qu'à chaque changement de direction, les particules impactent les parois. Le conduit 5 peut être parfaitement toroïdal ou comporter des portions droites avant les changements de direction. Le conduit 5 peut avoir toute autre configuration permettant aux particules d'impacter sur les parois, par exemple, des conduits en forme de `L' ou de 'U'. En impactant sur les parois, les particules de C₄A₃Ŝ et de CŜH₂ vont non seulement être modifiées, mais également s'éclater, ce qui permet de microniser lesdites particules et de réduire la granulométrie entre 5 µm et 50 µm.

Pour évacuer automatiquement les particules après l'étape de calcination aéraulique, l'orifice de sortie 50 du conduit 5 est maintenu en dépression (par exemple de 20 mbar à 300 mbar) par l'action d'un ventilateur de queue extracteur (non représenté). L'orifice de sortie 50 est préférentiellement pourvu d'un sélecteur gravimétrique 51 permettant l'évacuation des particules dès qu'elles ont atteint une granulométrie requise et éventuellement une surface spécifique requise. Les particules ainsi évacuées sont alors parfaitement homogénéisées. L'unité de gestion électronique permet de contrôler et de régler cette granulométrie en aval du conduit 5. La granulométrie de sortie est par exemple réglée entre 10 µm et 200 µm et une surface spécifique de Blain comprise entre 0.35 m²/g et 12 m²/g.

Conformément à l'installation représentée sur la figure annexée, la sortie 50 du conduit 5 est reliée à un moyen 7 pour séparer la vapeur d'eau des particules de C₄A₃Ŝ et de CŜH₂. En pratique, il s'agit d'un filtre cyclonique dans lequel les particules solides sont dirigées vers le bas et la vapeur d'eau vers le haut. Le filtre cyclonique est avantageusement associé à une batterie de filtres à manches à nettoyage pneumatique à air sec. Avantageusement, la vapeur d'eau récupérée est dirigée, via un conduit 81, vers un échangeur thermique 80. Dans le but d'améliorer le rendement énergétique de l'installation, il est possible d'alimenter la turbine 60 par de l'air préalablement chauffé par l'échangeur 80.

Dans le but de figer et stabiliser la structure cristalline des particules de C₄A₃Ŝ et de CŜH₂, il est avantageux de les refroidir après l'étape de calcination aéraulique, par exemple en ramenant leur température à moins de 70°C. En pratique, un refroidissement indirect s'opère par le passage du mélange composite dans une vis d'Archimède 9 dont les parois sont refroidies par de l'eau ou de l'air réfrigéré. Cette vis 9 est disposée à la sortie du séparateur 7. Le mélange composite rentrant dans la vis 9 est à une température inférieure à 120°C du fait des échanges thermiques successifs par contact avec les différents équipements. Toutefois, en calorifugeant ces équipements, il est possible de conserver le mélange à une température de l'ordre de 300°C. Le refroidissement brutal des particules chaudes au contact des parois froides, agit comme une trempe thermique qui fige et stabilise la structure cristalline des particules de C₄A₃Ŝ et de CŜH₂. Tout autre dispositif de trempe thermique connu de l'homme du métier peut être disposé en aval du conduit 5. Il est par exemple envisageable d'injecter directement un flux d'air sec froid sur les particules chaudes de C₄A₃Ŝ et de CŜH₂.

Le mélange est ensuite dirigé vers un réservoir 10 permettant de le stocker avant son conditionnement.

Il est également possible de parachever le mélange en introduisant d'autres fillers actifs ou adjuvants aux qualités spécifiques adaptées aux usages envisagés pour les liants. On peut par exemple ajouter des fluidifiants, des retardants, des fibres minérales et/ou végétales, des fillers calcaires, des fillers pouzzolaniques, des metakaolins, des cendres volantes, des fumées de silice, des additifs chimiques de rhéologies, des silices, des ciments Portland, des ciments sulfo-alumineux, des ciments ferro-alumineux, des ciments sidérurgiques, de la chaux, etc. Ces différents composants sont respectivement stockés dans des silos distincts 11 a, 11 b, 11 c. Une trémie doseuse 12 associée à un mélangeur 13 (par exemple à tambour), permet de préparer les mélanges finaux qui seront stockés dans des silos distincts 14a, 14b.

La demanderesse a pu constater que les particules d'anhydrite III éventuellement obtenues par la déshydratation du CŜH₂, conservent toutes leur métastabilité, y compris après refroidissement par une trempe brutale. Moyennant certaines précautions de stockage et de conditionnement, la métastabilité des liants obtenus affecte peu leurs performances dans le temps.

Il est toutefois avantageux de conserver une atmosphère sèche dans l'ensemble de l'installation (hygrométrie de l'air inférieure à 10 %, préférentiellement comprise entre 0 et 5 %) depuis la sortie des silos de stockage 1a, 1b et 1c jusqu'au réservoir 10 inclus. Pour contrôler cette hygrométrie, on utilise un dispositif de surpression pour éviter toute introduction d'air humide extérieur. Ce dispositif de surpression consiste en un compresseur d'air sec agencé avec des capteurs d'humidité de manière à pressuriser les conduits de transport et l'ensemble de l'installation. Tout autre dispositif de surpression équivalent convenant à l'homme du métier peut être utilisé. On peut également utiliser des extracteurs d'humidité agencés avec des contrôleurs d'hygrométrie.

Les liants hydrauliques obtenus forment, par addition d'eau en quantité appropriée, une pâte liante susceptible de durcir. Ils sont notamment utilisés pour la préparation d'un matériau de type béton ou mortier mais sont plus généralement adaptés pour tous les usages dans les secteurs de l'industrie du ciment et de l'industrie du plâtre. Après hydratation, la quantité d'ettringite primaire obtenue au bout de 24 heures est supérieure à 70 %, et peut atteindre 90 % au bout de 72 heures. Les dosages requis pour la fabrication de bétons ou mortiers sont similaires à ceux requis avec les ciments traditionnels. En pratique, les dosages varient de 250 Kg /m³ d'eau à 480 Kg /m³ d'eau, en fonction du type de béton et des performances recherchées.

La préparation et la fabrication de tels liants permettent d'accroître radicalement les performances des ciments traditionnels en leur conférant des caractéristiques et des performances spécifiques, dont notamment :
- hautes résistances mécaniques en flexion et compression (30 MPa à 100 MPa) au jeune âge et à terme (préfabrication rapide), ces performances étant supérieures à celles des ciments portland et supérieures ou égales à celles des ciments sulfo-alumineux,
- accroissement des résistances en milieu humide et immergé,
- réduction des gonflements et des retraits,
- rhéologie auto-compactante et auto-lissante,
- amélioration des comportements au feu et aux chocs thermiques,
- réduction des phénomènes de lixiviation,
- résistance aux effluents selvatiques et aux borates,
- adhérence renforcée sur pratiquement tous supports,
- résistance aux acides et aux bactéries,
- mise en oeuvre simplifiée par températures extrêmes (-10°C à + 50°C),
- applications spécifiques dans le conditionnement des déchets nucléaires,
- applications pour le compactage des déchets industriels et métaux lourds,
- accélérations des rotations industrielles et temps de séchage,
- applications dans le génie civil maritime et milieux humides,
- compatibilité avec tous les granulats existants pour les bétons et mortiers,
- applications thermiques, acoustiques et coupe-feu.

En outre, le procédé objet de l'invention permet de réduire d'au moins 35 % les émissions CO₂ par rapport aux procédés traditionnels, réduisant de fait les coûts de fabrication de 20% à 40%. Le bilan Carbonne de l'installation est compris entre 0,2 Kg_{CO2}/Kgₗᵢₐₙₜ de liant et 0,3 Kg_{CO2}/Kg_{liant,} de sorte qu'il est possible de classer les liants ainsi fabriqués dans la catégorie « liants environnementaux », en particulier dans les mélanges dont la teneur en C₄A₃Ŝ est minoritaire par rapport au CŜH₂.

### Exemples non exhaustifs de liants composites élaborés.

Les essais sont réalisés sur des mortiers normalisés : 1350 g de sable + 450 g de liant + 225 g d'eau, et les résistances calculées à 3 heures et 28 jours.
- liant n°1 : anhydrites solubles métastables 60% p/pₗᵢₐₙₜ + hemihydrate 10% p/pₗᵢₐₙₜ + clinker CSA 30% p/pₗᵢₐₙₜ : Résistance de 49 MPa à 85 MPa et 30 MPa en 3 heures.
- liant n°2 : anhydrites solubles métastables 70% p/pₗᵢₐₙₜ + hemihydrate 10% p/pₗᵢₐₙₜ + hydroxyde de calcium 20% p/pₗᵢₐₙₜ : Resistances de 45 MPa à 50 MPa et 29 MPa en 3 heures.
- liant n°3: anhydrites solubles métastables 20% p/pₗᵢₐₙₜ + anhydrites insolubles 50% p/pₗᵢₐₙₜ + clinker CSA 30% p/pₗᵢₐₙₜ : Résistances de 45 MPa à 70 MPa et 32 MP en 3 heures.
- liant n°4 : hemihydrate 10% p/pₗᵢₐₙₜ + sulfo-gypse 60% p/pₗᵢₐₙₜ + clinker CSA 30% p/pₗᵢₐₙₜ : Résistances de 33 MPa à 43 MPa et 20 MPa en 3 heures.
- liant n°5: anhydrites solubles métastables 30% p/pₗᵢₐₙₜ + cendres volantes 30% p/pₗᵢₐₙₜ + clinker CSA 40% p/pₗᵢₐₙₜ: Résistances de 55 MPa à 85 MPa et 30 MPa en 3 heures.
- liant n°6 : anhydrites solubles métastables 30% p/pₗᵢₐₙₜ + clinker CSA 70% p/pₗᵢₐₙₜ: Résistances de 60MPa à 100 MPa et 30 MPa en 3 heures.
- liant n°7 : hemihydrate 70% p/pₗᵢₐₙₜ + clinker CSA 30% p/pₗᵢₐₙₜ: Résistances 35 MPa à 55 MPa et 25 MPa à 3 heures.
- liant n°8 : anhydrites solubles métastables 25% p/pₗᵢₐₙₜ + ciment CSA 75% p/pₗᵢₐₙₜ: Résistances de 45 MPa à 80 MPa et 30 MPa à 3 heures.
- liant n°9 : anhydrites insolubles 70% p/pₗᵢₐₙₜ + Al₂O₃ vermiculite SF 30% p/pₗᵢₐₙₜ: Résistances de 15 MPa à 25 MPa et 10 MPa à 3 heures.
   liant n°10: anhydrites solubles métastables 20% p/pₗᵢₐₙₜ + fillers photocatalytiques TiO₂ 45% p/pₗᵢₐₙₜ + clinker CSA 25% p/pₗᵢₐₙₜ : Résistance de 25 MPa à 50 MPa et 15 MPa à 3 heures.

## Revendications

1. Procédé de préparation de liants hydrauliques comprenant un mélange de clinker, ou de ciment, sulfo-alumineux et de sulfates de calcium, et dont la réhydratation produit majoritairement de l'ettringite primaire, **se caractérisant par le fait que** ledit procédé comprenant une étape consistant à injecter dans un conduit (5) de calcination aéraulique, le mélange de clinker, ou de ciment, sulfo-alumineux et de sulfates de calcium sous forme de poudre pulvérulente, ledit conduit étant traversé par un flux d'air chaud turbulent, saturé en vapeur d'eau, ayant une température comprise entre 250°C et 700°C et une vitesse comprise entre 8 m/s et 40 m/s.

2. Procédé selon la revendication 1, comprenant une étape consistant à appliquer une contrainte mécanique sur les particules de clinker, ou de ciment, sulfo-alumineux et de sulfates de calcium, de manière modifier leur structure cristalline.

3. Procédé selon l'une des revendications précédentes, consistant à évacuer du conduit (5) les particules du mélange de clinker, ou de ciment, sulfo-alumineux et de sulfates de calcium, dès qu'elles ont atteint une granulométrie requise.

4. Procédé selon l'une des revendications précédentes, consistant à refroidir le mélange de clinker, ou de ciment, sulfo-alumineux et de sulfates de calcium, après l'étape de calcination aéraulique.

5. Procédé selon l'une des revendications précédentes, consistant à injecter dans le conduit (5) de calcination aéraulique, une masse plus importante de clinker, ou de ciment, sulfo-alumineux que de sulfates de calcium.

6. Procédé selon l'une des revendications précédentes, consistant, à mélanger le clinker, ou le ciment, sulfo-alumineux et les sulfates de calcium, avec au moins l'un des composants de la famille suivante : ciment portland, hydroxydes de calcium, ciment ferro-alumineux, fillers minéraux, laitier, chaux, carbonate de calcium, polycarboxylate, perlite, vermiculite, metakaolin ; cette étape de mélange étant réalisée avant l'étape de calcination aéraulique.

7. Procédé selon l'une des revendications précédentes, consistant à mélanger les particules du mélange de clinker, ou de ciment, sulfo-alumineux et de sulfates de calcium, avec d'autres fillers actifs ou adjuvants, cette étape de mélange étant réalisée après l'étape de calcination aéraulique.

8. Utilisation de liants hydrauliques obtenus par le procédé conforme à l'une des revendications 1 à 7, pour la préparation d'un matériau de type béton ou mortier.

9. Installation pour la mise en oeuvre du procédé conforme à la revendication 1, comportant :
- un conduit (5) de calcination aéraulique traversé par un flux d'air chaud turbulent, saturé en vapeur d'eau, ayant une température comprise entre 250°C et 700°C et une vitesse comprise entre 8 m/s et 40 m/s,
- un moyen (4) pour injecter dans ledit conduit, un mélange de clinker, ou de ciment, sulfo-alumineux et de sulfates de calcium sous forme de poudre pulvérulente.

10. Installation selon la revendication 9, comprenant une unité de gestion électronique permettant de contrôler et de régler :
- le débit, la vitesse, la température et la tension de vapeur d'eau du flux d'air chaud traversant le conduit (5) de calcination aéraulique,
- le débit d'injection du mélange de clinker, ou de ciment, sulfo-alumineux et de sulfates de calcium,
- la pression dans ledit conduit,
- la granulométrie des particules du mélange de clinker, ou de ciment, sulfo-alumineux et de sulfates de calcium, en amont et en aval dudit conduit.

11. Installation selon l'une des revendications 9 ou 10, dans laquelle le conduit (5) de calcination aéraulique est configuré de manière à ce que les particules du mélange de clinker, ou de ciment, sulfo-alumineux et de sulfates de calcium, impactent les parois dudit conduit lors de leur déplacement.

12. Installation selon la revendication 11, dans laquelle le conduit (5) de calcination aéraulique est de forme sensiblement toroïdale.

13. Installation selon l'une des revendications 9 à 12, dans laquelle le clinker, ou le ciment, sulfo-alumineux et les sulfates de calcium sont préalablement stockés dans des silos distincts (1a, 1b), une trémie doseuse (2) associée à un mélangeur (3) permettant de préparer le mélange destiné à être injecté dans le conduit (5) de calcination aéraulique.

14. Installation selon l'une des revendications 9 à 13, dans laquelle un moyen (7) pour séparer le fluide chargé de vapeur d'eau et les particules du mélange de clinker, ou de ciment, sulfo-alumineux et de sulfates de calcium, est disposé en aval du conduit (5) de calcination aéraulique.

15. Installation selon la revendication 14, dans laquelle un moyen (9) pour refroidir les particules du mélange de clinker, ou de ciment, sulfo-alumineux et de sulfates de calcium, est disposé en aval du moyen de séparation (7).
